# EUROPÄISCHE PATENTSCHRIFT

(11) **EP 3 521 029 B1**
(45) Veröffentlichungstag und Bekanntmachung des Hinweises auf die Patenterteilung: **16.03.2022**
(21) Anmeldenummer: 19000015.8
(22) Anmeldetag: 10.01.2019
(51) Int. Cl.: B33Y 80/00, B33Y 10/00, B33Y 30/00, B29C 64/209, B29C 64/245, B29C 64/336, B29C 64/194, B29C 64/118, B05D 3/00, B41M 3/14, H01F 41/00, H01F 7/02, H01F 41/02, H01F 41/16

(54) **EINSTELLUNGSMAGNET FÜR DIE HERSTELLUNG VON SICHERHEITSELEMENTEN MIT MAGNETISCH ORIENTIERTEN EFFEKTPIGMENTEN UND HERSTELLVERFAHREN FÜR SOLCHE EINSTELLMAGNETE**
ADJUSTMENT MAGNET FOR THE PRODUCTION OF SECURITY ELEMENTS WITH MAGNETICALLY ORIENTED EFFECT PIGMENTS AND METHOD FOR THE PRODUCTION OF SUCH ADJUSTMENT MAGNETS
AIMANT RÉGLABLE DESTINÉ À LA FABRICATION D'ÉLÉMENTS DE SÉCURITÉ DOTÉS DES PIGMENTS À EFFET À ORIENTATION MAGNÉTIQUE ET PROCÉDÉ DE FABRICATION DE TELS AIMANTS RÉGLABLE

(30) Priorität: 18.01.2018 DE 102018000385
(43) Veröffentlichungstag der Anmeldung: 07.08.2019
(73) Patentinhaber: Giesecke+Devrient Currency Technology GmbH, 81677 München (DE)
(72) Erfinder: Rahm, Michael, 83646 Bad Tölz (DE); Dehmel, Raphael, 83115 Neubeuern (DE)
(74) Vertreter: Giesecke + Devrient IP

(56) Entgegenhaltungen:
- EP-A1- 3 138 643
- WO-A1-2008/046702
- WO-A1-2016/023961
- US-A1- 2016 307 678
- HUBER C ET AL: "3D print of polymer bonded rare-earth magnets, and 3D magnetic field scanning with an end-user 3D printer", APPLIED PHYSICS LETTERS, A I P PUBLISHING LLC, US, Bd. 109, Nr. 16, 17. Oktober 2016 (2016-10-17), XP012214061, ISSN: 0003-6951, DOI: 10.1063/1.4964856 [gefunden am 2016-10-17]

## Beschreibung

Ein Verfahren gemäß der beanspruchten Erfindung zum Herstellen eines Einstell-Magneten ist in Anspruch 1 offenbart.

Ein Verfahren gemäß der beanspruchten Erfindung zur Produktion eines Sicherheitselements, bei dem ein Einstell-Magnet, hergestellt gemäß eines Verfahrens der Ansprüche 1-10, verwendet wird ist in Anspruch 11 offenbart.

Aus der WO 2006/069218 A1 sind Sicherheitselemente bekannt, die magnetisch orientierbare Effektpigmente enthalten. Jedes Druckpigment ist typischerweise plättchenförmig geformt und als Schichtverbund aufgebaut, der häufig aus zwei Lagen optischer Effektschichten besteht, zwischen denen eine Magnetschicht eingeschlossen ist. Als optische Effektschichten kommen metallisch spiegelnde Schichten ebenso wie farbschiebende Schichtsysteme, z.B. bestehend aus Absorber (teildurchlässiger Reflektor), Dielektrikum und Reflektor, infrage. Die eingeschlossene Magnetschicht ist in der Regel nicht sichtbar, ist aber zur Ausrichtung des Druckpigments erforderlich. Die in einer Druckfarbe suspergierten Druckpigmente werden auf ein Trägersubstrat, zum Beispiel Banknotenpapier oder ein polymeres Banknotensubstrat, gedruckt. Unmittelbar nach dem Druck ist die Farbe noch flüssig, so dass die magnetischen Druckpigmente in der sie umgebenden Farbmatrix noch beweglich sind. Anschließend wird durch Einstellmagnete ein externes Magnetfeld angelegt, in dem sich die magnetischen Druckpigmente ausrichten, wobei sie sich aufgrund der Formanisotropie typisch parallel zu den Feldlinien anordnen. In diesem Zustand wird die die Druckpigmente umgebende Farbmatrix, z.B. durch UV-Strahlung oder durch Zufuhr von Wärme, ausgehärtet, so dass die Druckpigmente im ausgerichteten Zustand immobilisiert werden. Für einen Beobachter bewirken die derart fixierten Druckpigmente einen optisch variablen Effekt, beispielsweise einen Lichtreflex, der beim Kippen des Elements entlang der Kipprichtung läuft, wie dies z.B. aus der WO 2006/069218 A1 bekannt ist. Je nach angelegtem Magnetfeld, also Ausgestaltung der Einstellmagnete, lassen sich die Druckpigmente vor dem Fixieren so ausrichten, dass verschiedene optisch variable Effekte realisiert werden können.

Da die Vielfalt und Beschaffenheit der optisch variablen Effekte, vor allem die örtliche Auflösung, durch das jeweils angelegte magnetische Streufeld bestimmt werden, kommt dem Einstellmagneten bzw. Einstellmagnetsystem, der/das das magnetische Feld erzeugt, eine besondere Bedeutung zu. Bislang werden die magnetischen Streufelder dadurch erzeugt, dass ein Einstellmagnet hergestellt wird, indem in die Oberfläche von Permanentmagneten spezielle Formen gefräst werden. Eine Mehrzahl von gleichartigen Einstellmagneten wird dann in eine Trägerrolle integriert, über die das Substrat mit der frisch aufgedruckten Farbe mit den magnetischen Druckpigmenten geführt wird, um die magnetischen Druckpigmente auszurichten.

Aus der Veröffentlichung Physik Journal 15, 2016, Nr. 12, Seite 16, ist es bekannt, Permanentmagnete mit einem 3D-Druckverfahren herzustellen. Aus einem Magnetpulver aus NdFeB-Körnern, das in einer Matrix aus Polyamid eingebettet ist, wird mittels Extrusion eine Endlosfaser erzeugt, die als Vorstufe für einen 3D-Drucker dient, wie er beim Rapid-Prototyping Anwendung findet. Dabei wird das Material in der Matrix zuerst geschmolzen und der Magnet schrittweise aufgebaut. Anschließend wird er mit einem sehr starken äußeren Feld von 4 Tesla magnetisiert.

Ein ähnliches Vorgehen findet sich auch in der Veröffentlichung C. Huber et al., Applied Physics Letters 109, 162401 (2016); doi: 10.1063/1.4964856. Um eine örtliche Variation des Magnetfeldes zu erreichen, schlägt die Veröffentlichung im Physik Journal vor, den Magneten lokal aus unterschiedlichen Vorstufenmaterialien mit unterschiedlichen Magnetpulvern zusammenzusetzen, um Magnetfelder mit maßgeschneiderten Profilen und Eigenschaften fertigen zu können.

In US 2016/307678 A1 wird eine magnetische Struktur erstellt durch Aufbringen eines Pulvers, Schmelzen und Kühlen, wobei schichtweise beim Kühlen magnetisiert wird. EP 3138643 A1 nennt unterschiedliche additive Verfahren, wie Stereolithografie oder Filamentextrusion, um eine magnetische Struktur gemäß einer Vorgabe aus einem Magnetmaterial zu erstellen. Bereiche mit unterschiedlichen magnetischen Eigenschaften werden in einem Magneten gemäß WO 2016/023961 A1 schichtweise aus unterschiedlichen magnetischem Pulvern erstellt.

Aus der WO 2004/007095 A2 ist es bekannt, unterschiedlich orientierte Permanentmagnete als Einstellmagnete nebeneinander anzuordnen und zur Ausrichtung der magnetischen Druckpigmente zu verwenden. Die Größe der einzelnen Einstellmagnete entspricht ungefähr der Größe der auszurichtenden Bereiche, also etwa 1 - 100 cm2.

In WO 2008/046702 A1 werden zur Ausrichtung der magnetischen Druckpigmente ein primärer Einstellmagnet und ein sekundärer Einstellmagnet überlagert, wobei der sekundäre Einstellmagnet durch Abfräsen von magnetisiertem Material aus einem Permanentmagnetenkörper gefertigt wurde.

Die Vielfalt der optisch variablen Strukturen, die sich mittels Einstellmagneten herstellen lassen, ist durch die Schwierigkeit begrenzt, magnetische Streufelder mit den benötigten Eigenschaften zu erzeugen, die man zum Einstellen der magnetischen Druckpigmente auf ein gewünschtes Muster benötigt. Insbesondere ist eine ausreichend große laterale Variation des Streufelds schwer zu erzielen. Diese Variation wirkt sich aber auf die Auflösung eines optisch variablen Sicherheitsmerkmals aus.

Aufgabe der Erfindung ist es, Herstellverfahren für EinstellMagnete anzugeben, die magnetische Streufelder ergeben, welche zur Ausrichtung von magnetischen Druckpigmenten geeignet sind. Die Magnete sollen insbesondere ein zur Erzeugung eines vordefinierten optisch variablen Effekts maßgeschneidertes magnetisches Streufeld aufweisen.

Die Erfindung ist in dem unabhängigen Anspruch 1 definiert. Vorteilhafte Weiterbildungen sind Gegenstand der abhängigen Ansprüche.

Der Magnet, der zur Ausrichtung von magnetischen Druckpigmenten bei der Produktion von Sicherheitselementen ausgebildet ist, wird so hergestellt, dass er ein festgelegtes magnetisches Streufeld erzeugt, welches magnetische Druckpigmente gemäß einem gegebenen Muster ausrichtet. Der Magnet wird mittels eines additiven, insbesondere schichtweise aufbauenden, Verfahrens hergestellt. Dabei werden die Magnetpartikel mit bestimmter magnetischer Orientierung und mit bestimmter Position verfestigt, so dass der fertiggestellte Magnet das festgelegte magnetische Streufeld erzeugt.

Das additive Verfahren, insbesondere ein schichtweiser Aufbau, erlaubt es einfach, die Magnetpartikel örtlich variierend und hinsichtlich verschiedener Parameter variierend vorzusehen, so dass komplexere und/oder feiner aufgelöste magnetische Streufelder erzeugt werden können. Des Weiteren wird eine Individualisierung/Serialisierung von Magneten denkbar. Die Magnetpartikel haben eine Größe (Kantenlänge(n)/Durchmesser) von 20 µm bis 1 mm, bevorzugt (von 100µm) bis 300µm, bzw. ein Volumen von 8000 µm³ bis 1 mm³, bevorzugt (von 0,001 mm³) bis 0,027 mm³. Die Vielzahl der nacheinander addierten Magnetpartikel bildet den Magneten. Der Magnet wird also additiv aus einer Vielzahl der Magnetpartikel hergestellt, die jeweils an einer bestimmten Position und mit einer bestimmten magnetischen Orientierung hinzugefügt werden. Mit jedem Schritt des additiven Verfahrens wird ein Magnetpartikel verfestigt (und somit hinzugefügt). In Teilschritten des additiven Verfahrensschrittes wird der Magnetpartikel vor dem Verfestigen an der bestimmten Position angeordnet (oder ausgewählt) und/ oder magnetisch orientiert. Als Magnetpartikel wird vorliegend insbesondere die mit dem additiven Verfahren individuell hinzufügbare Menge Magnetmaterial verstanden. Das additive Verfahren ordnet die Magnetpartikel vorzugsweise einzeln lokal an. Das additive Verfahren baut vorzugsweise den Magneten schichtweise aus den Magnetpartikeln auf.

Für das additive Verfahren kommen, wie später noch erläutert werden wird, 3D-Druckverfahren, wie selektives Lasersintern, Laserschmelzen, Elektronenstrahlschmelzen, Fused Deposition Modeling, Polyjet Modeling, 3D-Siebdruck, Digital Light Processing oder Stereolithographie, infrage.

In der Regel werden die Magnetpartikel auf einem Träger angeordnet und verfestigt. Wie später genauer betrachtet wird, kann der Träger einen Teil des Magneten bilden oder aber der fertige Magnet vom Herstellungsträger getrennt werden.

Die Magnetpartikel sind Dauermagnetpartikel (bzw. hartmagnetische Magnetpartikel). Der Magnetpartikel umfasst in der Regel einen Verfestigungsanteil sowie einen hartmagnetischen Anteil. Ferrite (z.B. Sr, Ba) oder seltene Erden (z.B. NdFeB) können als hartmagnetischer Anteil verwendet werden. Der hartmagnetische Anteil kann Kobalt-Samarium (SmCo5, Sm2Co17, Sm(Co,Cu,Fe,Zr)z), Neodym-Eisen-Bor (NdFeB), AlNiCo-Legierungen, Hartferrite auf Basis Barium, Strontium, PtCo-Legierungen, CuNiFe und CuNiCo-Legierungen, FeCoCr-Legierungen, MnAlC-Legierungen umfassen. Der Verfestigungsanteil ist in der Regel durch das additive Verfahren vorgegeben. Insbesondere kann ein Kunststoff, der insbesondere thermisch schmelzbar ist, den Verfestigungsanteil bilden.

Ein erster Parameter ist die individuelle, schichtabschnittsweise oder schichtweise magnetische Orientierung der Magnetpartikel. Die Magnetpartikel können bereits vor dem Anordnen im additiven Verfahren magnetisch orientiert sein. Sie können insbesondere individuell, also partikelweise, magnetisch orientiert werden. Ebenso können bereits magnetisch orientierte Magnetpartikel mit individueller magnetischer Orientierung angeordnet werden. Beispielsweise könnten mehrere Anordnungsvorrichtungen, wie Druckköpfe, jeweils unterschiedlich orientierte Magnetpartikel enthalten. Alternativ oder zusätzlich kann eine bezüglich der Anordnungsrichtung flexible Anordnungsvorrichtung bereits orientierte Magnetpartikel individuell magnetisch orientiert anordnen. Weiterhin ist es ebenso möglich, bereits angeordnete Magnetpartikel individuell magnetisch zu orientieren. Alternativ können nur ein Abschnitt - mit mehreren Magnetpartikeln - einer einzelnen Schicht bzw. nur eine einzelne Schicht vor (oder nach) dem Verfestigen, also schichtabschnittsweise bzw. schichtweise, magnetisch orientiert werden. Durch die örtlich variierende Orientierung der Magnetpartikel kann das magnetische Streufeld sehr fein eingestellt werden, insbesondere feiner, als dies mit herkömmlichen Frästechniken für Magnete möglich ist und zudem feiner als es mittels eines Magnetfeldes zur Orientierung des ganzen Magneten möglich wäre. Durch die individuelle magnetische Orientierung der Magnetpartikel kann der Magnet insbesondere drei benachbarte Magnetpartikel umfassen, welche drei unabhängige magnetische Orientierungen aufweisen.

Ein weiterer möglicher Parameter ist das Vorsehen von Lücken oder Hohlräumen ohne Magnetpartikel, insbesondere in örtlicher Variierung, innerhalb des Magneten. Auch dies ermöglicht eine sehr feine Einstellung des magnetischen Streufeldes. Lücken, Hohlräume oder Hinterschneidungen - im vorliegenden Sinne - sind größer als ein Einzelner der Magnetpartikel. Lücken oder Hohlräume können optional während des additiven Verfahrens oder nachträglich mit einem nicht-magnetischen Material verfüllt werden. Bevorzugt sind die Lücken, Hohlräume oder Hinterschneidungen materialfreie Lücken, materialfreie Hohlräume oder materialfreie Hinterschneidungen (nicht verfüllt).

Ein weiterer möglicher Parameter ist eine magnetische Dichte, insbesondere die Anordnungsdichte im Magneten oder die hartmagnetische Dichte im Magnetpartikel, die örtlich variabel im Magneten eingestellt werden kann. Bevorzugt wird die Anordnungsdichte der Magnetpartikel im Magneten variiert. Der Mittenabstand benachbarter Magnetpartikel zueinander kann dabei örtlich variiert werden, insbesondere in einem Bereich zwischen 80% und 190%, bevorzugt zwischen 100% und 190%, der Magnetpartikelbreite. Das Anordnen oder Auswählen der Magnetpartikel wird entsprechend angepasst. Ebenso oder zusätzlich kann ein Prozentsatz des hartmagnetischen Anteils im Magnetpartikel örtlich variiert sein. Der relative hartmagnetische Anteil kann beispielsweise variiert werden indem Anordnungsvorrichtungen mit unterschiedlichen Ausgangsmaterialen (wie 90% hartmagnetischer Anteil in Druckkopf 1 und 60% in Druckkopf 2) bereitgestellt werden oder indem ein flüchtiger Anteil und/ oder der Verfestigungsanteil im Magnetpartikel örtlich reduziert wird (beispielsweise durch ein lokal höhere Temperatur/ Bestrahlung/ ...).

Ein weiterer möglicher Parameter zur Einstellung des magnetischen Streufeldes ist die Verwendung nicht-magnetischer und/ oder weichmagnetischer Partikel, mit denen die Magnetpartikel gemischt werden bzw. anstelle von Magnetpartikeln angeordnet werden. Weichmagnetische Partikel umfassen einen weichmagnetischen Anteil sowie einen verfestigenden Anteil. Die nicht-magnetischen Partikel umfassen einen (oder nur den) verfestigenden Anteil. Bevorzugt enthalten die Magnetpartikel, die nicht-magnetischen Partikel und die weichmagnetischen Partikel das gleiche Verfestigungsmittel. Vom Partikeltyp abhängige Verfestigungsmittel sind jedoch ebenso denkbar.

Die genannten Parameter können je nach Anforderungen an das magnetische Streufeld und/ oder den zur Verfügung stehenden Herstelltechniken einzeln oder in beliebigen Kombinationen eingesetzt werden.

Es wird ein Einstell-Magnet hergestellt, der zur Ausrichtung von magnetischen Druckpigmenten geeignet ist, wie sie bei der Produktion von Sicherheitselementen, insbesondere für Wertdokumente, wie Banknoten, erfolgt. Ein Muster für die gewünschte Ausrichtung der magnetischen Druckpigmente im Sicherheitselement ist vorgegeben. Dieses Muster ist entscheidend für die äußere Erscheinung, die das Sicherheitselement für einen Betrachter später haben wird. Auf Basis des Musters wird ein magnetisches Streufeld festgelegt, das die magnetischen Druckpigmente im Produktionsprozess gemäß dem Muster ausrichtet. Vor der Herstellung des Magneten wird also das magnetische Streufeld festgelegt, indem ein Muster für die Ausrichtung der magnetischen Druckpigmente im Sicherheitselement vorgegeben wird und auf Basis des Musters ein magnetisches Streufeld festgelegt wird, das die magnetischen Druckpigmente gemäß dem Muster ausrichtet.

Das Herstellverfahren ist nicht darauf eingeschränkt, den Magneten hinsichtlich seines magnetischen Streufeldes von Anfang an, also quasi von Null zu produzieren. Es ist gleichermaßen möglich, einen Permanentmagneten als Grundkörper zu verwenden und auf diesem additiv den Magneten weiter aufzubauen. Der Grundkörper kann dabei bereits eine Struktur magnetischer Abschnitte haben, beispielsweise indem er magnetische und nicht-magnetische Abschnitte aufweist. Auch kann er bereits anderweitig hinsichtlich seines magnetischen Streufeldes strukturiert sein, beispielsweise durch ein Fräsverfahren. Im Hinblick auf eine besonders einfache Herstellung ist es dabei bevorzugt, einen Permanentmagneten zu verwenden, der einerseits bereits durch ein Fräsverfahren strukturiert ist, andererseits aber eine glatte Oberseite für das additive Herstellverfahren aufweist. Diese glatte Oberseite kann entweder dadurch erreicht werden, dass nach dem Fräsen ein diamagnetisches Material zum Auffüllen und egalisieren der Oberfläche des Permanentmagneten aufgebracht wird oder dass ein plattenförmiger Permanentmagnet verwendet wird, bei dem auf einer Seite das Material durch Fräsung strukturiert ist/wird und auf der gegenüberliegenden Seite das additive Verfahren durchgeführt wird.

Ein (nicht-magnetischer, magnetischer oder abschnittsweise magnetischer) Träger kann Bestandteil des Magneten sein und dabei insbesondere als mechanische Stabilisierung dienen. In einer anderen Variante wird der fertiggestellte Magnet vom Träger gelöst. Insbesondere bei einem nicht-magnetischen Träger kann der Träger nach dem Herstellverfahren entfernt werden. Der Magnet wird ohne Träger zur Ausrichtung der magnetischen Druckpigmente bereitgestellt bzw. verwendet.

Das geschilderte Herstellverfahren für einen Einstell-Magneten kann insbesondere als Vorstufe für die Herstellung eines Sicherheitselementes eingesetzt werden. Dann wird mittels des auf die genannte Weise hergestellten Einstell-Magneten ein Sicherheitselement produziert, wobei magnetische Druckpigmente mit dem Magneten ausgerichtet werden, um einen optisch variablen Effekt zu erzeugen.

Ein Magnet, der zur Ausrichtung von magnetischen Druckpigmenten bei der Produktion von Sicherheitselementen für Banknoten oder dergleichen eingesetzt werden kann, kann insbesondere nach dem oben genannten Verfahren hergestellt werden. Er erzeugt ein magnetisches Streufeld, das ausgebildet ist, magnetische Druckpigmente bei der Produktion des Sicherheitselementes gemäß einem vorbestimmten Muster auszurichten. Der Magnet ist mittels eines additiven, insbesondere schichtweise aufbauenden Verfahrens hergestellt. Diese Herstellung ist auch an einem fertigen Magneten erkennbar. Insbesondere der schichtweise erfolgte Aufbau ist leicht erkennbar, ebenso wie die partikelweise erfolgte Positionierung unmittelbar oder mittelbar (anhand von Abständen, Hohlräumen, Unterschneidungen, Materialwechsel ...) erkennbar ist. Beim additiven Verfahren werden Magnetpartikel in bestimmter Orientierung auf einem Träger verfestigt und so angeordnet und/ oder orientiert, dass der Magnet das elektrische Streufeld erzeugt.

Als strukturelle Eigenschaften des Magneten kommen dabei die eingangs genannten Parameter gleichermaßen infrage, nämlich dass die Magnetpartikel im Magneten individuell örtlich variierend orientiert sind und/ oder dass die Magnetpartikel im Magneten mit örtlich variierenden Lücken oder Hohlräumen angeordnet sind und/ oder dass die Magnetpartikel im Magneten mit örtlich variierender Dichte angeordnet sind und/ oder dass die Magnetpartikel im Magneten mit nicht-magnetischen und/ oder weichmagnetischen Partikeln gemischt sind.

Der Magnet kann insbesondere einen Träger aufweisen, der magnetische und nicht-magnetische Abschnitte hat. Er kann weiter insbesondere einen Permanentmagneten als Grundkörper aufweisen, auf dem die Magnetpartikel mit einem additiven, insbesondere schichtweisen Verfahren aufgebracht sind.

Nachfolgend wird die Erfindung anhand von Ausführungsbeispielen unter Bezugnahme auf die beigefügten Zeichnungen, die ebenfalls erfindungswesentliche Merkmale offenbaren können, noch näher erläutert. Zur Vermeidung von Wiederholungen werden gleiche oder funktionelle oder strukturelle entsprechende Elemente in verschiedenen Figuren mit gleichen Bezugszeichen bezeichnet und nicht mehrmals erläutert. In den

### Figuren zeigen:

- Fig. 1: eine Schemadarstellung zur Ermittlung der magnetischen Eigenschaften eines Einstell-Magneten, der zur Ausrichtung magnetischer Druckpigmente bei der Produktion eines Sicherheitselementes eingesetzt wird,
- Fig. 2 bis 4: Schemadarstellungen verschiedener Ausführungsformen einer Druckeinrichtung, mit welcher der Magnet der Fig. 1 hergestellt wird, und
- Fig. 5 und 6: schematische Schnittdarstellungen durch einen Magneten, der mit einer der Vorrichtungen gemäß Fig. 2 bis 4 hergestellt wurde.

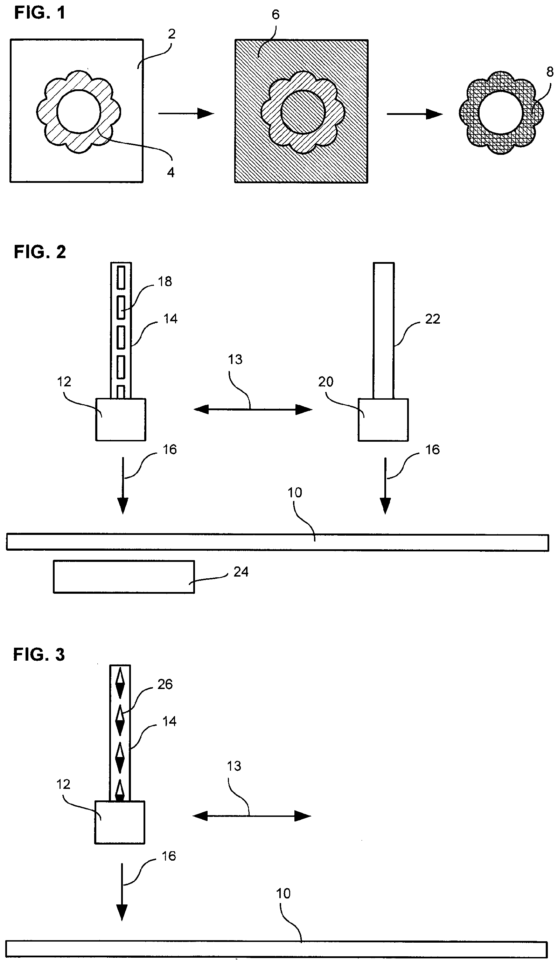

Fig. 1 zeigt ein Vor-Verfahren, das zur Herstellung eines Sicherheitselementes 2 nötig ist. Das Sicherheitselement 2 wird mittels magnetischer Druckpigmente gefertigt, die so ausgerichtet werden, dass sie einen optisch variablen Effekt bewirken. Das Sicherheitselement 2 wird dazu mit magnetischen Druckpigmenten, die im ausgerichteten Zustand einen optischen Effekt bewirken, bedruckt und diese werden unter Anwendung eines Einstell-Magneten ausgerichtet, bevor sie in der Druckschicht sich verfestigen oder verfestigt werden. Die magnetischen Eigenschaften des Einstell-Magneten sind für den optischen Effekt damit von großer Bedeutung, und die Herstellung des Einstell-Magneten ein entscheidender Schritt zur Produktion des Sicherheitselementes 2. Fig. 1 bezieht sich auf die Ermittlung der magnetischen Eigenschaften des Einstell-Magneten. Zur Herstellung des optisch variablen Sicherheitselements 2 werden Druckpigmente eines bestimmten Typs bzw. bestimmter Typen verwendet, die vorbestimmte magnetische Eigenschaften haben. In der Regel sind die Druckpigmente plättchenförmig, und ihre magnetischen Eigenschaften werden durch die Formanisotropie dominiert. Dies bedeutet, dass sie sich tendenziell parallel zu einem angelegten externen Magnetfeld ausrichten. Alternativ sind jedoch auch kugelförmige ausrichtbare Pigmente oder Mikrokapselpigmente mit ausrichtbarem Kapselinhalt verwendbar. Um für das Sicherheitselement 2 ein gewünschtes Muster 4 der Ausrichtung der Druckpigmente zu erzeugen, ist deshalb ein bestimmtes magnetisches Streufeld 6 notwendig, um die Druckpigmente dem angestrebten Muster 4 entsprechend auszurichten. Das Streufeld 6 wird aus dem Motiv 4 ermittelt. Das Streufeld 6 wiederum gibt die Struktur des Einstell-Magneten 8 vor, der das Streufeld 6 erzeugen soll. Für diese Schritte können Computersimulationen, beispielsweise basierend auf einer Finite-Elemente-Methode, sehr hilfreich sein. Z.B. durch iteratives Vorgehen kann man ein Modell des Magneten 8 entwerfen, welches sowohl dessen räumliche Abmessungen als auch dessen magnetische Eigenschaften charakterisiert. Der Magnet 8 ist aufgrund des nachfolgend beschriebenen Herstellungsverfahrens auch mit komplizierter Form und lokal variierender magnetischer Eigenschaften wie Sättigungsmagnetisierung und Anisotropie herstellbar.

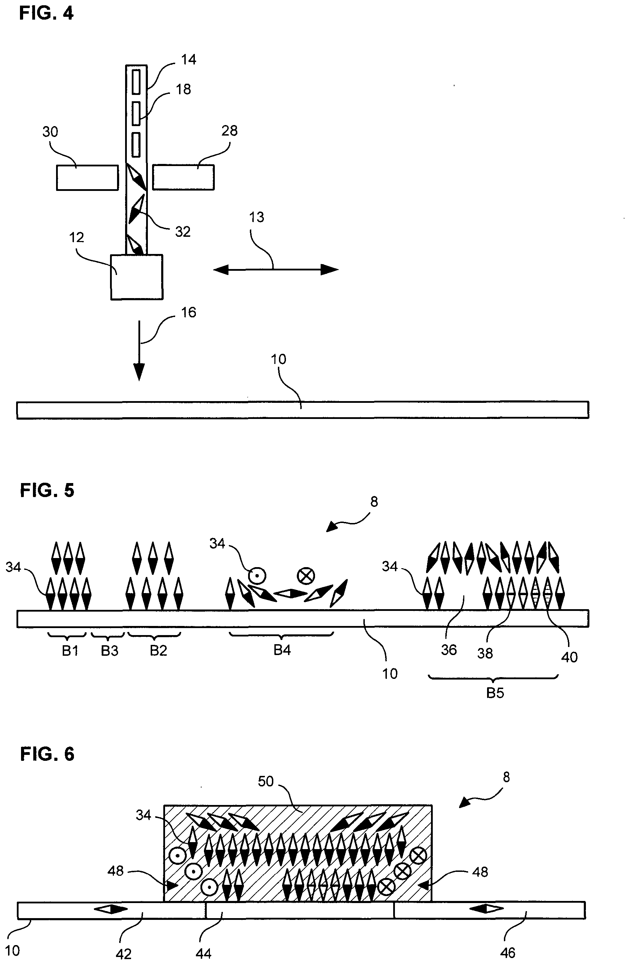

Der Magnet wird - wie in Fig. 2 erkennbar - beispielsweise auf einem Träger 10 mit Hilfe eines 3D-Druckerkopfs 12 hergestellt. Der 3D-Druckerkopf 12 verflüssigt Filament 14 und bringt es in Richtung eines Pfeiles 16 magnetpartikelweise und Schicht für Schicht auf den Träger 10 auf. Beim Drucken wird eine Kunststoffmatrix des Filaments 14 aufgeschmolzen und das fließfähige Material in Richtung auf den Träger 10 beispielsweise über eine Düse zugeführt. Ein Magnetpartikel ist beispielsweise 100 µm groß (Volumen 0,001 mm³). Bei einem schichtweisen Aufbau beträgt die Schichtdicke einer einzeln aufzutragenden Schicht in diesem Beispiel 100 µm. Dieses Verfahren kann auf einem nicht-magnetischen Träger 10 ausgeführt werden. Es kann aber auch, wie anhand Fig. 6 erläutert werden wird, das Magnetfeld eines als Träger 10 verwendeten Dauermagneten modifiziert werden, indem z.B. zusätzliche Teile auf den Magneten gedruckt werden oder nachträglich an diesem befestigt werden. Das Filament 14 und allgemeiner das zu verdruckende Material umfasst eine Vielzahl von Magnetpartikeln 18. Die Magnetpartikel 18 umfassen eine Kunststoffmatrix, als verfestigenden Anteil, in der hartmagnetische Anteile eingebettet sind. Ein zu verdruckendes Material kann optional, insbesondere abhängig vom additiven Verfahren, zudem einen flüchtigen Anteil umfassen. Der flüchtige Anteil bildet keinen Anteil des Magneten (bzw. des verfestigten Magnetpartikels). Der flüchtige Anteil verflüchtigt sich beim Anordnen und/ oder Verfestigen (bzw. beim Drucken).

In der Ausführungsform der Fig. 2 sind die Magnetpartikel 18 noch nicht magnetisch orientiert, wenn sie der Druckkopf 12 in Richtung des Pfeils 16 auf dem Träger 10 partikelweise (und schichtweise) aufbringt. Es ist deshalb im Bereich des Trägers 10, z.B. unter ihm, eine steuerbare Magneteinrichtung 24 vorgesehen, welche die Magnetpartikel 18 vor dem Verfestigen hinsichtlich ihrer Magnetisierungsrichtung orientiert (ausrichtet). Auf diese Weise kann partikelweise, schichtabschnittsweise oder schichtweise lateral die Orientierung der Magnetpartikel 18 in jeder Schicht eingestellt werden. Der Druckkopf 12 ist in Richtung des Doppelpfeils 13 verschiebbar, so dass der Körper des Magneten 8 schichtweise aus Magnetpartikeln 18 in durch die Magneteinrichtung 24 steuerbarer Orientierung mindestens schichtweise, optional auch lateral innerhalb einer Schicht aufgebaut wird.

Um die Dichte der Magnetpartikel über einen größeren Wertebereich steuern zu können, ist optional mindestens ein weiterer Druckkopf 20 vorgesehen, der ebenfalls in Richtung eines Pfeiles 16 aus einem Filament 22, das keine Magnetpartikel (oder, wie anhand einer späteren Figur erläutert wird, weichmagnetische Partikel) beim additiven Produktionsprozess beisteuert.

Das Filament 22 eines der weiteren Druckköpfe 20 kann auch einen anderen Anteil hartmagnetischem Material umfassen, also beispielsweise prozentual mehr oder weniger hartmagnetisches Material enthalten.

Fig. 3 zeigt eine weitere Ausgestaltung, bei der im Filament 14 bereits orientierte Magnetpartikel 26 vorgesehen sind, die in vorbestimmter Struktur, Anordnung etc. auf den Träger 10 gedruckt werden. Das für Fig. 2 gesagte gilt gleichermaßen für Fig. 3, insbesondere ist auch hier mindestens ein weiterer Druckkopf 20 einsetzbar.

Der eine weitere oder die weiteren Druckköpfe 20 können anders orientierte Magnetpartikel (oder anderes Material umfassen, beispielsweise weichmagnetische Partikel oder nicht-magnetische Partikel oder einen prozentual veränderten hartmagnetischen Anteil) für den Magneten bereitstellen. Die Anordnungsposition der Magnetpartikel ist beispielsweise durch eine Relativbewegung von Träger 10 zu dem Druckkopf 12, 20 steuerbar. Bevorzugt ist der Druckkopf 12, 20 in seiner Position steuerbar. Besonders bevorzugt ist der Druckkopf 12, 20 in seiner Anordnungsrichtung steuerbar. Er kann somit im einheitlich orientierte Magnetpartikel mit unterschiedlicher magnetischer Orientierung anordnen.

Fig. 4 zeigt eine weitere Ausgestaltung, bei der ähnlich der Fig. 2 im Filament 14 noch nicht orientierte Magnetpartikel 18 vorgesehen sind. Diese werden jedoch im Rahmen des Druckprozesses von einer steuerbaren Magneteinrichtung 28 individuell oder zumindest abschnittsweise orientiert, wobei die Orientierung optional durch eine UV-Lampe 30 oder eine andere Fixiereinrichtung im Filament 14 fixiert wird, so dass der Druckkopf 12 in Richtung des Pfeiles 16 die individuell ausgerichteten Magnetpartikel 32 aufträgt.

Auch hier kann der mindestens eine weitere Druckkopf 20 verwendet werden.

Die Figuren 2 bis 4 wurden beschrieben am Beispiel eines additiven Verfahrens mit einem festen Ausgangsmaterial. Die einzelnen beschriebenen Aspekte oder deren Kombinationen sind jedoch analog anwendbar für andere additive Verfahren, nur beispielsweise auch für flüssiges oder pulverförmiges Ausgangsmaterial, für laserbasierte statt mechanische Positionierung oder für trägerlose statt trägerbasierte additive Verfahren.

Fig. 5 zeigt Aspekte möglicher Ausführungsformen für den Magneten 8, welche durch die oben geschilderten Herstellverfahren erhalten werden können. Erstens ist es möglich, die Magnetpartikel 34 im Magneten 8 mit unterschiedlicher Dichte anzuordnen, wie die Bereiche B1 und B2 zeigen. Zweitens ist es möglich, Lücken, wie der Bereich B3 veranschaulicht, vorzusehen. Drittens ist es möglich, die Magnetpartikel 34 in individueller Orientierung anzuordnen, wie der exemplarische Bereich B4 zeigt. Dabei können die Magnetpartikel natürlich nicht nur in der Zeichenebene, sondern auch senkrecht dazu gedreht werden. Der gekreuzte Kreis zeigt ein Beispiel, in dem die Magnetausrichtung von Nord nach Süd in die Zeichenebene hineinläuft, der mit einem Punkt versehene Kreis die entgegengesetzte Richtung von Süd nach Nord zur Zeichenebene. Viertens können, wie ein weiterer Bereich B5 veranschaulicht, in der Anordnung der Magnetpartikel 34, die individuell ausgerichtet werden können oder nicht, nicht nur nach oben durchreichende Lücken, wie im Bereich B3 ausgebildet werden, sondern auch Hohlräume 36. Fünftens ist es möglich, durch einen oder weitere Druckköpfe oder einen umschaltbaren Druckkopf nicht-magnetische Partikel 38 oder weichmagnetische Partikel 40 anzuordnen.

Fig. 6 zeigt, dass sechstens der Träger 10 nicht zwingend nicht-magnetisch sein muss. Er weist hier zwei unterschiedlich magnetisierte Magnetbereiche 42 und 46 sowie einen nicht-magnetischen Bereich 44 auf. Auf diesem ist exemplarisch eine Vielzahl von Partikeln 38 aufgebracht. Durch die benachbarten Bereiche 42 und 46 und deren Magnetfeld ergibt sich eine Hinterschneidung 48.

Weiter ist in Fig. 6 gezeigt, dass siebtens der gesamte Magnet 8 mit einem Verguss 50 aus nicht-magnetischem Material eingebettet oder abgedeckt sein kann. Dieser Verguss kann insbesondere auch die Lücken 36 auffüllen. Natürlich ist die Anwendung eines solchen Vergusses 50 ganz unabhängig von der Ausgestaltung des Trägers 10 möglich.

Alle sieben Aspekte können alleine oder in beliebigen Kombinationen eingesetzt werden, um das gewünschte magnetische Streufeld 6 zu erhalten.

Die für den 3D-Druck verwendete Kunststoffmatrix kann zum Beispiel aus Polyamid bestehen, ein Material mit besonders günstigen Fließeigenschaften und günstigen mechanischen Eigenschaften. Die Konzentration der magnetischen Partikel 18 in der Kunststoffmatrix kann zum Beispiel 90 Gewichtsprozent betragen. Die in der Kunststoffmatrix enthaltenen Magnetpartikel umfassen beispielsweise Ferrite (z.B. Sr, Ba) oder seltene Erden (z.B. NdFeB). Die Partikel können sphärisch, flächig (plättchenförmig) oder elongiert geformt sein. Typische Größen sind im Bereich von 5 µm bis zu mehrere hundert Mikrometer, bevorzugt im Bereich von 20 µm bis 80 µm. Die magnetischen Eigenschaften der Magnetpartikel hängen nicht nur vom Material, aus dem sie bestehen, von deren Größe und Form, sondern auch von deren Struktur ab. Kristalline Magnetpartikel weisen in der Regel eine Kristallanisotropie auf.

Während des Druckens des Magneten 8 kann die Polarität der Magnetpartikel 32, 34 lokal variiert werden, indem die Magnetpartikel 18 durch ein externes Magnetfeld orientiert und anschließend befestigt werden (Fig. 1). Eine andere Möglichkeit zur Orientierung ist eine Vor-Orientierung im Filament 14, oder eine Orientierung in der Extrusionsdüse aufgrund einer geometrischen Anisotropie (nadelförmige Partikel werden sich z.B. immer entlang der Flussrichtung des zähflüssigen Druckmaterials ausrichten). Bei einer schwenk- und/ oder kippbaren Düse kann so die Orientierung der Magnetpartikel 34 im hergestellten Magneten 8 festgelegt werden. Möglich ist auch die Verwendung einer magnetisierbaren Düse, welche die sie durchströmenden Magnetpartikel 18 ausrichtet. In allen Varianten muss die Kunststoffmatrix oder das magnetische Material in Art und Konzentration nicht variiert werden.

Weiter können magnetisierte oder nicht magnetisierte Partikel 18, 34 während des Druckvorgangs oder nach dem Druckvorgang durch das externe Magnetfeld aus der Magneteinrichtung 24 lokal variierend magnetisiert werden: Während des Druckvorgangs haben die Partikel für kurze Zeit eine erhöhte Temperatur, was die Resistenz gegen eine Um-Magnetisierung verringert. Wenn ein entsprechendes externes magnetisches Feld angelegt wird, kann also selektiv nur das momentan (oder vor kurzem) gedruckte Material entsprechend magnetisiert werden. Ein externes Magnetfeld mit einer während des Druckvorganges zeitlich variierenden Polarisationsrichtung erlaubt so eine lokal variierende Polarität des hergestellten Magneten.

Eine alternative 3D-Drucktechnik zur Erzeugung erfindungsgemäßer Magnete besteht im selektiven Lasersintern. Dabei werden feine Pulver, die ganz oder teilweise aus magnetischem oder magnetisierbarem Material bestehen, Schicht für Schicht aufgetragen und jeweils bereichsweise mit einem Laserstrahl aufgeschmolzen und mit der Unterlage verbunden. Das nicht verschmolzene Material wird entfernt.

Eine weitere 3D-Drucktechnik ist die Stereolithographie, bei der ein strahlungshärtbares flüssiges Material Schicht für Schicht mit Hilfe geeigneter elektromagnetischer Strahlung, vorzugsweise im sichtbaren und UV-Bereich, lokal ausgehärtet wird. In das strahlungshärtbare Material können magnetische oder magnetisierbare Partikel eingebracht werden.

Die Vorteile des 3D-Drucks liegen darin, dass die Form des Einstell-Magneten und sein Magnetfeld sehr flexibel gestaltet werden können. Auch Hohlräume oder nicht magnetische Einschlüsse definierter Form lassen sich problemlos integrieren. Insgesamt kann mit einer oder mehreren der oben beschriebenen Methoden ein Magnet 8 erzeugt werden, dessen mechanische und magnetische Eigenschaften als Funktion des Orts innerhalb des Magneten 8 sehr definiert eingestellt werden können. Das Verfahren ist sehr flexibel und einfach durchzuführen, so dass die Entwicklung geeigneter designspezifischer Magnete 8, die typischerweise iterativ in mehreren Schleifen durchgeführt wird, durch die Verwendung des 3D-Drucks maßgeblich beschleunigt wird.

Wie eingangs beschrieben, wird der 3D-gedruckte Magnet 8 so gestaltet, dass sein magnetisches Streufeld 6 maßgeschneidert den für das Muster 4 des Sicherheitselements 2 benötigten Vorgaben entspricht. Auf diese Weise können Effektpigmente auf räumlicher Skala filigraner orientiert werden, als dies mit den im Stand der Technik üblichen Magneten der Fall ist. Dadurch wiederum werden höher aufgelöste Designs optisch variabler Elemente und somit auch eine größere Gestaltungsvielfalt möglich.

### Bezugszeichenliste

- 2: Sicherheitselement
- 4: Muster
- 6: magnetisches Streufeld
- 8: Magnet
- 10: Träger
- 12,20: Druckkopf
- 13: Doppelpfeil
- 14, 22: Filament
- 16: Pfeil
- 18, 26, 32, 34: Magnetpartikel
- 24, 28: steuerbare Magneteinrichtung
- 30: UV-Lampe
- 36: Hohlraum
- 38: nicht-magnetisches Pigment
- 40: weichmagnetisches Pigment
- 42, 46: magnetischer Trägerabschnitt
- 44: nicht-magnetischer Trägerabschnitt
- 48: Hinterschneidung
- 50: Verguss
- B1-B5: Bereich

## Patentansprüche

1. Verfahren zum Herstellen eines Einstell-Magneten (8), der zur Ausrichtung von magnetischen Druckpigmenten bei der Produktion von Sicherheitselementen (2) ausgebildet ist, mit:
- Vorgeben eines Musters (4) für die Ausrichtung der magnetischen Druckpigmente im Sicherheitselement (2),
- auf Basis des vorgegebenen Musters (4) Festlegen des magnetischen Streufeldes (6), das die magnetischen Druckpigmente gemäß dem Muster (4) ausrichtet, und
- Herstellen des Magneten (8) gemäß dem festgelegten magnetischen Streufeld (6) für das Muster (4), so dass er ein magnetisches Streufeld (6) erzeugt, welches magnetische Druckpigmente gemäß dem vorgegebenen Muster (4) ausrichtet, wobei
- der Magnet (8) mittels eines additiven Verfahrens hergestellt wird, wobei Magnetpartikel (34) mit bestimmter Position und mit bestimmter magnetischer Orientierung verfestigt werden, so dass der Magnet (8) das festgelegte magnetische Streufeld (6) erzeugt; und wobei
+ Magnetpartikel von einer steuerbaren Magneteinrichtung (28) individuell oder zumindest abschnittsweise orientiert werden, so dass ein Druckkopf (12) die ausgerichteten Magnetpartikel aufträgt, oder
+ bereits orientierte Magnetpartikel von einem Druckkopf (12, 20), der in seiner Anordnungsrichtung steuerbar ist, mit unterschiedlicher magnetischer Orientierung angeordnet werden, oder
+ bereits orientierte Magnetpartikel von einem Druckkopf (12) und anders orientierte Magnetpartikel von einem weiteren Druckkopf (20) angeordnet werden, oder
+ im Bereich eines Trägers (10), auf welchem die Magnetpartikel verfestigt werden, eine steuerbare Magneteinrichtung (24) die Magnetpartikel (18) vor dem Verfestigen magnetisch orientiert.

2. Verfahren nach Anspruch 1, **dadurch gekennzeichnet, dass** die Magnetpartikel (34) individuell mit ihrer bestimmten Position angeordnet und verfestigt werden oder individuell an der bestimmten Position ausgewählt und verfestigt werden.

3. Verfahren nach Anspruch 1 oder 2, **dadurch gekennzeichnet, dass** die Magnetpartikel (34) individuell, schichtabschnittsweise oder schichtweise magnetisch orientiert werden, um das festgelegte magnetische Streufeld (6) zu erzeugen.

4. Verfahren nach einem der Ansprüche 1 bis 3, **dadurch gekennzeichnet, dass** die Magnetpartikel (34) an Positionen verfestigt werden, um zumindest eine Lücke (B3) ohne Magnetpartikel, zumindest eine Hinterschneidung (48) ohne Magnetpartikel und/oder zumindest einen Hohlraum (36) ohne Magnetpartikel im Magneten auszubilden.

5. Verfahren nach einem der Ansprüche 1 bis 4, **dadurch gekennzeichnet, dass** die Magnetpartikel (34) vor dem Verfestigen mit örtlich variierender Dichte (B1, B2) angeordnet werden oder mit örtlich variierendem hartmagnetischen Anteil im Magnetpartikel vorgesehen werden, um das festgelegte magnetische Streufeld (6) zu erzeugen.

6. Verfahren nach einem der Ansprüche 1 bis 5, **dadurch gekennzeichnet, dass** vor dem Verfestigen nicht-magnetische und/ oder weichmagnetische Partikel (38, 40) angeordnet werden, um das festgelegte magnetische Streufeld (6) zu erzeugen.

7. Verfahren nach einem der Ansprüche 1 bis 6, **dadurch gekennzeichnet, dass** die Magnetpartikel auf einem Träger (10) verfestigt werden, der vorzugsweise magnetische (42, 46) und nicht-magnetische Abschnitte (44) aufweist, um das festgelegte magnetische Streufeld (6) zu erzeugen.

8. Verfahren nach einem der Ansprüche 1 bis 7, **dadurch gekennzeichnet, dass** der Magnet vom Träger (10) gelöst und ohne Träger (10) zur Ausrichtung magnetischer Druckpigmente bereitgestellt wird.

9. Verfahren nach einem der Ansprüche 1 bis 8, **dadurch gekennzeichnet, dass**
- für vor-orientierte Magnetpartikel durch eine schwenk- und/oder kippbare Düse die Orientierung der Magnetpartikel im Magneten festgelegt wird, wobei die Magnetpartikel insbesondere
vor-orientiert in einem Filament vorliegen, oder
in einer Extrusionsdüse aufgrund einer geometrischen Anisotropie vor-orientiert werden, oder
in einer magnetisierbaren Düse, welche die Magnetpartikel durchströmen, vor-orientiert werden; oder
- die Magnetpartikel (18) während des Druckens durch ein externes Magnetfeld orientiert und anschließend verfestigt werden.

10. Verfahren nach einem der Ansprüche 1 bis 9, **dadurch gekennzeichnet, dass** die Magnetpartikel (34) eine Größe von 20µm bis 1 mm, bevorzugt bis 300 µm, und/ oder Volumen von 8000 µm³ bis 1 mm³, bevorzugt bis 0,027 mm³ aufweisen.

11. Verfahren zum Herstellen eines Sicherheitselementes (2), insbesondere für Wertdokumente, wobei ein Einstell-Magnet (8) mittels eines Verfahrens gemäß einem der Ansprüche 1 bis 10 hergestellt wird und dann ein Substrat mit einer Farbe enthaltend magnetisch ausrichtbare Druckpigmente bedruckt wird und die Druckpigmente vor dem Verfestigen der Farbe mit dem hergestellten Magneten (8) ausgerichtet werden, um ein Muster (4) auf dem Sicherheitselement (2) zu erzeugen.

## Claims

1. A method for producing a setting magnet (8) adapted for aligning magnetic printing pigments in the production of security elements (2), with:
- specifying a pattern (4) for the alignment of the magnetic printing pigments in the security element (2),
- defining, on the basis of the specified pattern (4), the magnetic stray field (6) which aligns the magnetic printing pigments according to the pattern (4), and
- producing the magnet (8) according to the defined stray magnetic field (6) for the pattern (4) so that it generates a stray magnetic field (6) which aligns magnetic printing pigments according to the specified pattern (4), wherein
- the magnet (8) is produced by means of an additive method, wherein magnetic particles (34) having a specific location and a specific magnetic orientation are solidified so that the magnet (8) generates the defined stray magnetic field (6); and wherein
+ magnetic particles are oriented individually or at least in sections by a controllable magnetic device (28) so that a print head (12) applies the aligned magnetic particles, or
+ already oriented magnetic particles are arranged with different magnetic orientation by a print head (12, 20) which can be controlled in its arrangement direction, or
+ already oriented magnetic particles are arranged by a print head (12) and differently oriented magnetic particles are arranged by a further print head (20), or
+ in the region of a carrier (10) on which the magnetic particles are solidified, a controllable magnetic device (24) magnetically orientates the magnetic particles (18) prior to the solidifying.

2. The method according to claim 1, **characterized in that** the magnetic particles (34) are individually arranged with their specific location and solidified, or are individually selected at the specific location and solidified.

3. The method according to claim 1 or 2, **characterized in that** the magnetic particles (34) are magnetically oriented individually, in sections or in layers, in order to generate the defined stray magnetic field (6).

4. The method according to any of claims 1 to 3, **characterized in that** the magnetic particles (34) are solidified at locations in order to form at least one gap (B3) without magnetic particles, at least one undercut (48) without magnetic particles and/or at least one cavity (36) without magnetic particles in the magnet.

5. The method according to any of claims 1 to 4, **characterized in that** the magnetic particles (34) prior to the solidifying are arranged with locally varying density (B1, B2) or are provided with locally varying magnetically hard proportions in the magnetic particle in order to generate the defined stray magnetic field (6).

6. The method according to any of claims 1 to 5, **characterized in that**, prior to the solidifying, non-magnetic and/or magnetically soft particles (38, 40) are arranged in order to generate the defined stray magnetic field (6).

7. The method according to any of claims 1 to 6, **characterized in that** the magnetic particles are solidified on a carrier (10) which preferably has magnetic (42, 46) and non-magnetic sections (44) in order to generate the defined stray magnetic field (6).

8. The method according to any of claims 1 to 7, **characterized in that** the magnet is detached from the carrier (10) and is made available without carrier (10) for aligning magnetic printing pigments.

9. The method according to any of claims 1 to 8, **characterized in that**
- for pre-oriented magnetic particles, the orientation of the magnetic particles in the magnet is defined by a pivotable and/or tiltable nozzle, wherein the magnetic particles in particular
are present pre-oriented in a filament, or
are pre-oriented in an extrusion die on account of a geometric anisotropy; or
are pre-oriented in a magnetizable nozzle through which the magnetic particles traverse by flow; or
- the magnetic particles (18) are oriented by an external magnetic field during printing and are subsequently solidified.

10. The method according to any of claims 1 to 9, **characterized in that** the magnetic particles (34) have a size of 20 µm to 1 mm, preferably up to 300 µm, and/or a volume of 8000 µm³ to 1 mm3, preferably to 0.027 mm³.

11. A method for producing a security element (2), in particular for value documents, wherein a setting magnet (8) is produced by means of a method according to any of claims 1 to 10 and then a substrate is printed with an ink containing magnetically alignable printing pigments and the printing pigments are aligned with the produced magnet (8) prior to the solidifying of the ink in order to produce a pattern (4) on the security element (2).

## Revendications

1. Procédé de fabrication d'un aimant de réglage (8) conçu pour l'alignement de pigments magnétiques d'impression lors de la production d'éléments de sécurité (2), comprenant :
- prédétermination d'un motif (4) pour l'alignement des pigments magnétiques d'impression dans l'élément de sécurité (2),
- sur la base du motif (4) prédéterminé, définition du champ magnétique de dispersion (6) qui aligne les pigments magnétiques d'impression suivant le motif (4), et
- fabrication de l'aimant (8) suivant le champ magnétique de dispersion (6) défini pour le motif (4), de telle sorte qu'il génère un champ magnétique de dispersion (6) qui aligne des pigments magnétiques d'impression suivant le motif (4) prédéterminé,
cependant que
- l'aimant (8) est fabriqué au moyen d'un procédé additif, cependant que des particules magnétiques (34) de position déterminée et d'orientation magnétique déterminée sont figées, de telle sorte que l'aimant (8) génère le champ magnétique de dispersion (6) défini ; et cependant que
+ des particules magnétiques sont orientées individuellement ou au moins par sections par un équipement magnétique (28) commandable, de telle sorte qu'une tête d'impression (12) applique les particules magnétiques alignées, ou
+ des particules magnétiques déjà orientées sont agencées avec une orientation magnétique différente par une tête d'impression (12, 20) dont la direction d'alignement est commandable, ou
+ des particules magnétiques déjà orientées sont agencées par une tête d'impression (12), et des particules magnétiques autrement orientées sont agencées par une autre tête d'impression (20), ou
+ dans la zone d'un support (10) sur lequel les particules magnétiques sont figées, un équipement magnétique (24) commandable oriente magnétiquement les particules magnétiques (18) avant le figeage.

2. Procédé selon la revendication 1, **caractérisé en ce que** les particules magnétiques (34) sont agencées et figées individuellement en leur position déterminée, ou sont sélectionnées et figées individuellement à la position déterminée.

3. Procédé selon la revendications 1 ou 2, **caractérisé en ce que** les particules magnétiques (34) sont orientées magnétiquement individuellement, par sections de couches ou par couches afin de générer le champ magnétique de dispersion (6) défini.

4. Procédé selon une des revendications de 1 à 3, **caractérisé en ce que** les particules magnétiques (34) sont figées à des positions afin d'engendrer dans l'aimant au moins une brèche (B3) sans particules magnétiques, au moins une contre-dépouille (48) sans particules magnétiques et/ou au moins une cavité (36) sans particules magnétiques.

5. Procédé selon une des revendications de 1 à 4, **caractérisé en ce que** les particules magnétiques (34) sont agencées avant le figeage à une densité (B1, B2) spatialement variable ou sont prévues avec une proportion magnétique dure spatialement variable dans la particule magnétique afin de générer le champ magnétique de dispersion (6) défini.

6. Procédé selon une des revendications de 1 à 5, **caractérisé en ce que**, avant le figeage, des particules non magnétiques et/ou magnétiques douces (38, 40) sont agencées afin de générer le champ magnétique de dispersion (6) défini.

7. Procédé selon une des revendications de 1 à 6, **caractérisé en ce que** les particules magnétiques sont figées sur un support (10) qui comporte de préférence des sections magnétiques (42, 46) et non magnétiques (44) afin de générer le champ magnétique de dispersion (6) défini.

8. Procédé selon une des revendications de 1 à 7, **caractérisé en ce que** l'aimant est détaché du support (10) et mis à disposition sans support (10) pour l'alignement de pigments magnétiques d'impression.

9. Procédé selon une des revendications de 1 à 8, **caractérisé en ce que**
- pour des particules magnétiques pré-orientées, l'orientation des particules magnétiques dans l'aimant est fixée par une buse pouvant être pivotée et/ou basculée, cependant que les particules magnétiques en particulier
se trouvent sous forme pré-orientées dans un filament, ou
sont pré-orientées dans une buse d'extrusion par suite d'une anisotropie géométrique, ou
sont pré-orientées dans une buse magnétisable à travers laquelle les particules magnétiques s'écoulent ; ou
- les particules magnétiques (18) sont orientées pendant l'impression par un champ magnétique externe, puis figées.

10. Procédé selon une des revendications de 1 à 9, **caractérisé en ce que** les particules magnétiques (34) ont une taille comprise entre 20 µm et 1 mm, de préférence jusqu'à 300 µm, et/ou des volumes compris entre 8000 µm³ et 1 mm³ , de préférence jusqu'à 0,027 mm³.

11. Procédé de fabrication d'un élément de sécurité (2), en particulier pour documents de valeur, cependant qu'un aimant de réglage (8) est fabriqué au moyen d'un procédé conforme aux revendications de 1 à 10, et qu'ensuite un substrat est imprimé avec une encre contenant des pigments d'impression magnétiquement alignables, et les pigments d'impression sont, avant le figeage de l'encre, alignés avec l'aimant (8) fabriqué afin de générer un motif (4) sur l'élément de sécurité (2).
